# EUROPÄISCHE PATENTSCHRIFT

(11) **EP 2 199 562 B1**
(45) Veröffentlichungstag und Bekanntmachung des Hinweises auf die Patenterteilung: **02.05.2018**
(21) Anmeldenummer: 09175761.7
(22) Anmeldetag: 12.11.2009
(51) Int. Cl.: F01P 5/06, F04D 25/02, F16D 35/02, F01P 7/04

(54) **Lüfterantrieb, insbesondere für ein Kraftfahrzeug**
Ventilation drive, in particular for a motor vehicle
Entraînement de ventilateur, en particulier pour un véhicule automobile

(30) Priorität: 19.12.2008 DE 102008063702
(43) Veröffentlichungstag der Anmeldung: 23.06.2010
(73) Patentinhaber: MAHLE Behr GmbH & Co. KG, 70469 Stuttgart (DE)
(72) Erfinder: Sixt, Eberhard, 71106, Magstadt (DE); Klein, Kurt, 71665, Vaihingen (DE); Jacobi, Michael, 70499, Stuttgart (DE)
(74) Vertreter: Grauel, Andreas

(56) Entgegenhaltungen:
- EP-A1- 1 031 751
- DE-A1-102006 008 576
- US-A- 3 272 292
- US-A- 4 153 389

## Beschreibung

Die Erfindung betrifft einen Lüfterantrieb, insbesondere für ein Kraftfahrzeug nach dem Oberbegriff des Patentanspruches 1.

Lüfterantriebe werden für die Kühlung der Brennkraftmaschine von Kraftfahrzeugen eingesetzt und sind in der Regel im Motorraum des Kraftfahrzeuges hinter einem Wärmeübertrager oder einer Baueinheit von mehreren Wärmeübertragern, z. B. einem Kühlmittelkühler, einem Ladeluftkühler und/oder einem Kältemittelkondensator angeordnet. Es ist bekannt, den Lüfter nicht direkt von der Brennkraftmaschine, sondern über eine geregelte Kupplung, z. B. eine Flüssigkeitsreibungskupplung, anzutreiben. Durch die Regelung wird eine effiziente und energiesparende Kühlung erreicht, indem der Lüfter nur bei Kühlbedarf eingeschaltet wird und gegebenenfalls auch mit unterschiedlichen an den Kühlbedarf angepasster Drehzahl läuft. Die Flüssigkeitsreibungskupplung arbeitet nach dem Prinzip der Scherreibung, wobei für die Drehmomentübertragung ein viskoses Medium, insbesondere Silikonöl verwendet wird. Da die Drehmomentübertragung mit Schlupf erfolgt (Abtriebsdrehzahl kleiner als Antriebsdrehzahl) entsteht infolge der Reibung Wärme, welche zur Einhaltung einer zulässigen Betriebstemperatur der Kupplung abgeführt werden muss. Hierzu weist die Kupplung auf ihrer Gehäuseaußenseite Kühlrippen auf, welche von Umgebungsluft überstrichen werden. Dieser Kühleffekt ist bei höheren Leistungen, insbesondere höheren Antriebsdrehzahlen, nicht ausreichend. Es besteht die Gefahr, dass das Silikonöl überhitzt wird und dabei seine Übertragungsfähigkeit verliert, was zur Blockade der Kupplung führen kann.

In der DE 10 2007 037 733 A1 der Anmelderin wurde daher bereits ein zweites Lüfterrad vorgeschlagen, welches in Luftströmungsrichtung vor der Flüssigkeitsreibungskupplung angeordnet ist und somit eine zusätzliche gezielte Kühlung des vorderen Gehäuseteils der Kupplung bewirkt.

Es ist ferner bekannt, die Drehzahl einer Flüssigkeitsreibungskupplung elektromagnetisch zu steuern, wie z. B. in der DE 196 45 478 A1 offenbart. Hierzu wird in Luftströmungsrichtung vor oder hinter der Flüssigkeitsreibungskupplung eine Elektromagnetspule stationär angeordnet, welche einen im Inneren der Kupplung befindlichen Ventilmechanismus betätigt. Wie in der DE 43 44 085 A1 der Anmelderin offenbart, kann die Elektromagnetspule auch im Inneren der Flüssigkeitsreibungskupplung, insbesondere in deren Vorratskammer, angeordnet sein.

Lüfterantriebe zum Antrieb eines Lüfterrades durch eine Flüssigkeitsreibungskupplung sind aus US 4153389, EP 1031751 oder DE 102006008576 bekannt.

Die Flüssigkeitsreibungskupplung ist vielfach über ihr Gehäuse auf einer Antriebswelle, die auch die Kurbelwelle der Brennkraftmaschine sein kann, gelagert, vorzugsweise über ein Wälzlager. Da die Flüssigkeitsreibungskupplung auch das Gewicht des Lüfters trägt, ist dieses Wälzlager, welches sich an der Rückseite der Kupplung, d. h. der der Brennkraftmaschine zugewandten Seite befindet, starken Beanspruchungen ausgesetzt und darüber hinaus unzureichend gekühlt, da der Hauptkühlluftstrom über die Vorderseite des Kupplungsgehäuses verläuft.

Es ist Aufgabe der vorliegenden Erfindung, bei einem Lüfterantrieb der eingangs genannten Art die Kühlung zu verbessern, insbesondere die Kühlung der Flüssigkeitsreibungskupplung, sodass für die gesamte Flüssigkeitsreibungskupplung, auch bei hohen Antriebsleistungen und/oder hohen Antriebsdrehzahlen, keine Überhitzung auftritt.

Die Aufgabe der Erfindung wird durch die Merkmale des Patentanspruches 1 gelöst. Vorteilhafte Ausgestaltungen ergeben sich aus den Unteransprüchen.

Erfindungsgemäß ist auf der Rückseite der Flüssigkeitsreibungskupplung eine Luftfördereinrichtung angeordnet, welche bewirkt, dass Kühlluft an die Rückseite der Kupplung, insbesondere auch in den Bereich des die Kupplung abstützenden Wälzlagers, gelangt. Damit wird eine verstärkte konvektive Wärmeabfuhr auf der Rückseite der Kupplung erreicht, mit der Folge, dass die zulässigen Grenztemperaturen nicht überschritten werden, insbesondere nicht die zulässige Lagertemperatur und die zulässige Temperatur des viskosen Mediums, insbesondere des Silikonöls.

Nach einer bevorzugten Ausführungsform ist für die Luftfördereinrichtung ein Gebläse, insbesondere ein Gebläserad, vorgesehen, welches mit der Antriebsdrehzahl der Kupplung umläuft. Das Gebläserad ist daher fest mit der Antriebswelle der Kupplung verbunden und vorzugsweise benachbart zum Kupplungslager angeordnet. Aufgrund der erfindungsgemäßen Anordnung des Gebläses auf der Rückseite saugt dieses Luft aus dem Druckbereich des Lüfters an, was die Förderleistung des Gebläses erhöht. Damit kann gezielt Kühlluft auf die Rückseite der Kupplung, d. h. das rückseitige Gehäuseteil, geblasen werden. Für eine verbesserte Kühlwirkung und Luftführung können auf dem rückseitigen Gehäuseteil vorzugsweise radial verlaufende Kühlrippen angeordnet sein.

Nach einer besonders bevorzugten Ausführungsform ist der Luftfördereinrichtung respektive dem Gebläse eine Luftleiteinrichtung zugeordnet, welche schalen- oder haubenförmig ausgebildet ist und daher auch als Gebläsezarge mit einem das Gebläse ummantelnden Zargenring bezeichnet wird. Durch die Gebläsezarge wird der angesaugte Kühlluftstrom kanalisiert und gezielt über die Rückseite des Kupplungsgehäuses radial nach außen geführt.

Nach einer weiteren bevorzugten Ausführungsform ist die Luftleiteinrichtung oder Gebläsezarge gleichzeitig Lüfternabe, d. h. sie trägt den Lüfter und ist am Kupplungsgehäuse befestigt.

Nach einer weiteren bevorzugten Ausführungsform ist zwischen der Vorderseite der Kupplung und deren Rückseite eine Luftströmungsverbindung vorgesehen, durch welche die vom rückseitigen Gebläse angesaugte Kühlluft auf die Vorderseite der Kupplung gelangt und sich dort mit der anströmenden Luft vermischt.

Nach einer weiteren bevorzugten Ausführungsform ist die Luftströmungsverbindung als Umlenkkanal ausgebildet, welcher die rückseitige Kühlluftströmung aus einer axialen Strömungsrichtung in eine etwa radiale Strömungsrichtung umlenkt, sodass die rückseitige Kühlluft - ähnlich der Wirkung eines Injektors - in die Lüfteranströmung eingeblasen wird. Damit wird eine Störung der vorderseitigen Strömungsverhältnisse vermieden und eine verlustarme Anströmung des Lüfters, insbesondere im Bereich der Schaufelwurzeln, erreicht.

Nach einer weiteren bevorzugten Ausführungsform sind auf der Vorderseite der Kupplung, d. h. dem vorderen Kupplungsgehäuse, Kühlrippen, vorzugsweise radial verlaufend, angeordnet, welche eine saubere Lüfteranströmung in Verbindung mit dem rückseitig angesaugten Kühlluftstrom bewirken.

Nach einer weiteren bevorzugten Ausführungsform ist das Gebläse als Axialgebläse ausgebildet, wodurch eine axiale Ausrichtung des Kühlluftstromes auf die Rückseite des Kupplungsgehäuses erreicht wird. Möglich sind jedoch auch Ausbildungen als Halbaxial- oder als Radialgebläse.

Ein Ausführungsbeispiel der Erfindung ist in der Zeichnung dargestellt und wird im Folgenden näher beschrieben, wobei sich aus der Beschreibung und/oder der Zeichnung weitere Merkmale und/oder Vorteile ergeben können. Es zeigen
- Fig. 1: einen Schnitt eines erfindungsgemäßen Lüfterantriebes und
- Fig. 2: ein Diagramm, welches einen Vergleich zwischen der Erfindung und dem Stand der Technik zeigt.

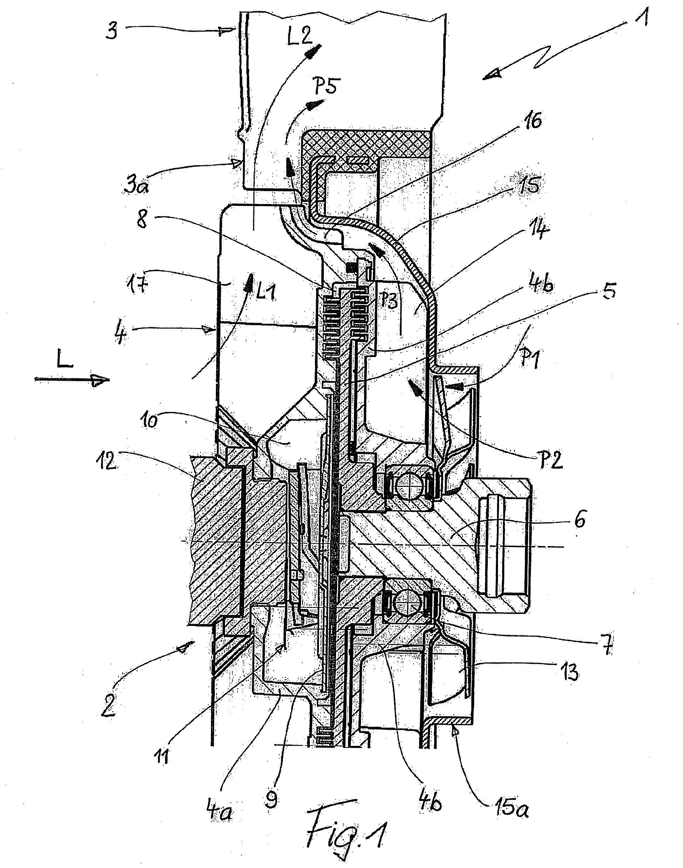

**Fig. 1** zeigt in einer Schnittdarstellung einen erfindungsgemäßen Lüfterantrieb 1, welcher eine Flüssigkeitsreibungskupplung 2 und einen von dieser angetriebenen Lüfter 3, ausgebildet als Axiallüfter, aufweist. Die Flüssigkeitsreibungskupplung 2 umfasst ein Gehäuse 4, welches durch ein vorderes Gehäuseteil 4a und ein rückseitiges Gehäuseteil 4b gebildet wird. Die Begriffe vorderes oder vorderseitiges und rückseitiges Gehäuseteil sind in Bezug auf die Luftströmungsrichtung, dargestellt durch einen Pfeil L, zu sehen. Die Flüssigkeitsreibungskupplung 2, im Folgenden auch kurz Kupplung 2 genannt, umfasst ferner eine Antriebsscheibe 5, welche drehfest auf einer Antriebswelle 6 befestigt und von dieser angetrieben wird. Das Gehäuse 4 ist über ein als Wälzlager 7 ausgebildetes Lager gegenüber der Antriebswelle 6 drehbar gelagert und bildet mit der Antriebsscheibe 5 einen labyrinthartigen Arbeitsraum 8, welcher durch eine Vielzahl von mit einer Scherflüssigkeit, insbesondere Silikonöl füllbaren Spalten, gebildet wird. Der Arbeitsraum 8 ist durch eine Trennwand 9 von einem Vorratsraum 10 abgeteilt, in welchem ein nicht näher beschriebener Ventilmechanismus 11 angeordnet ist. Im vorderen Gehäuseteil 4a, auch Deckel 4a genannt, ist eine elektromagnetische Steuerungseinheit 12 (teilweise dargestellt) befestigt, über welche der Ventilmechanismus 11 betätigt und die Zirkulation von Silikonöl zwischen der Vorratskammer 10 und der Arbeitskammer 8 kontrolliert wird. Das über die Antriebsscheibe 5 eingeleitete Drehmoment wird durch Flüssigkeitsreibung in der Arbeitskammer 8 auf das Gehäuse 4 übertragen. Das Prinzip der Flüssigkeitsreibungskupplung einschließlich ihrer Steuerung ist aus dem Stand der Technik, insbesondere dem eingangs Genannten, bekannt. Die Antriebswelle 6 ist auf nicht dargestellte Weise mit der Brennkraftmaschine eines Kraftfahrzeuges, beispielsweise mit deren Kurbelwelle, verbunden - insofern befindet sich die nicht dargestellte Brennkraftmaschine in der Zeichnung rechts, d. h. in Luftströmungsrichtung L hinter der Flüssigkeitsreibungskupplung 1. Der Lüfter 3 fördert Kühlluft für die Kühlung der Brennkraftmaschine, d. h. er saugt Luft durch ein nicht dargestelltes Kühlmodul, beispielsweise bestehend aus einem Kühlmittelkühler, Ladeluftkühler und/oder Kondensator.

Erfindungsgemäß ist auf der Rückseite der Kupplung 2, benachbart zum Wälzlager 7, ein Gebläse 13 angeordnet, welches drehfest mit der Antriebswelle 6 verbunden ist und somit mit dessen Drehzahl umläuft. Das Gebläse 13 ist im dargestellten Ausführungsbeispiel als Axialgebläse ausgebildet, welches Kühlluft aus dem rückseitigen Bereich der Kupplung 2, d. h. der Druckseite des Lüfters 3 ansaugt und, entsprechend den Strömungspfeilen P1, P2, P3, über die Rückseite der Kupplung 2 fördert. Zur Erhöhung der Kühlwirkung sind auf der Außenseite des rückseitigen Gehäuseteiles 4b Kühlrippen 14 angeordnet, welche vorzugsweise in radialer Richtung verlaufen. Die Rückseite der Kupplung 2 wird durch eine schalen- oder haubenförmige Luftleiteinrichtung 15 begrenzt, welche gleichzeitig das Verbindungsglied zwischen Lüfter 3 und Gehäuse 4 der Kupplung 2 bildet. Die Luftleiteinrichtung 5 fungiert somit auch als Lüfternabe und ist durch nicht dargestellte Verbindungselemente, z. B. Befestigungsschrauben, mit dem rückseitigen Gehäuseteil 4b verbunden. Die Luftleiteinrichtung 15, auch Gebläsezarge 15 genannt, weist lufteingangsseitig einen Zargenring 15a auf, welcher das Gebläserad 13 ummantelt. Dadurch ergibt sich in Verbindung mit dem Axialgebläserad 13 eine auf das rückseitige Gehäuseteil 4b gerichtete Kühlluftströmung, welche anschließend in radiale Richtung nach außen entsprechend dem Pfeil P3 umgelenkt wird.

Zwischen der Rückseite der Kupplung 2 und deren Vorderseite, d. h. dem Lufteintrittsbereich 3a für den Lüfter 3 ist eine als Umlenkkanal 16 ausgebildete Luftströmungsverbindung angeordnet. Durch den Umlenkkanal 16 gelangt die Kühlluftströmung von der Rückseite der Kupplung 2 auf deren Vorderseite und in den Lufteintrittsbereich 3a des Lüfters 3, was durch einen Strömungspfeil P4 angedeutet ist. Am vorderen Gehäuseteil 4a, dem Deckel der Kupplung 2, sind im radial äußeren Bereich vorzugsweise radial verlaufende Kühlrippen 17 angeordnet, welche die in Richtung des Pfeils L auf die Kupplung 2 treffende Luftströmung entsprechend dem Pfeil L1 in radiale Richtung umlenken. Die Strömung im Eintrittsbereich 3a des Lüfters 3 ist durch die Strömungspfeile P5 und L2 dargestellt, woraus zu erkennen ist, dass die Strömungen von der Rückseite und der Vorderseite der Kupplung sich relativ verlustfrei zu einer gemeinsamen Lüfterströmung vereinigen. Die Lüfterströmung, insbesondere im Schaufelwurzelbereich, wird somit nicht gestört, vielmehr kann infolge der Zufuhr der energiereichen Kühlluftströmung P4, P5 eine Verbesserung der Lüfterströmung erzielt werden.

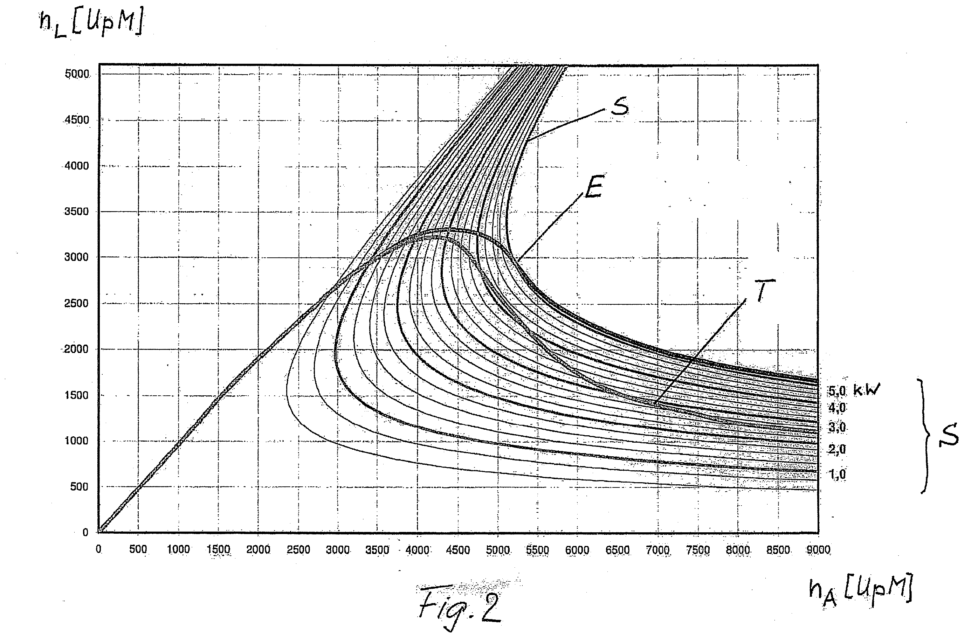

**Fig. 2** zeigt ein Diagramm, bei welchem die Lüfterdrehzahl n_{L} über der Antriebsdrehzahl n_{A} aufgetragen ist. Die Antriebsdrehzahl n_{A} entspricht somit der Drehzahl der Antriebswelle 6 und der Antriebsscheibe 5 in Fig. 1, während die Lüfterdrehzahl n_{L} der Drehzahl des Lüfters 3 und der Drehzahl des Gehäuses 4 der Flüssigkeitsreibungskupplung 2 entspricht. Eine erste Kurve T im Diagramm gemäß Fig. 2 zeigt den Drehzahlverlauf für eine Flüssigkeitsreibungskupplung nach dem Stand der Technik, d. h. ohne zusätzliche Belüftung oder Kühlung. Infolge des Schlupfes zwischen Antriebsscheibe 5 und Kupplungsgehäuse 4 ist die Lüfterdrehzahl n_{L} stets kleiner als n_{A}. Die Schlupfleistung, welche abhängig von der Relativdrehzahl (Δn = n_{A} - n_{L}) ist, ist als hyperbelförmige Kurvenschar S für verschiedene Schlupfleistungen von 1,0 kW bis 5,0 kW im Diagramm eingezeichnet. Die Schlupfleistung, die auch vom übertragenen Drehmoment zwischen Antriebsscheibe und Kupplungsgehäuse abhängig ist, ist eine Verlustleistung, die Wärme erzeugt und die Kupplung erhitzt. Die Kurve T zeigt bei einer Antriebsdrehzahl n_{A} von etwa 4000 UpM ein Maximum, d. h. bei einer Lüfterdrehzahl n_{L} zwischen 3000 und 3500 UpM. Wird die Antriebsdrehzahl n_{A} weiter erhöht, fällt die Lüfterdrehzahl bei zunächst steigender Schlupfleistung, d. h. erhöhter Wärmeentwicklung ab. Dieser Bereich sollte zwecks Erhaltung der Funktionsfähigkeit der Kupplung vermieden werden. Eine zweite Kurve E zeigt den Drehzahlverlauf für den erfindungsgemäßen Lüfterantrieb entsprechend Fig. 1, d. h. mit einer zusätzlichen Kühlung der Kupplungsrückseite mittels Gebläse 13. Zunächst, d. h. in einem Antriebsdrehzahlbereich von 0 bis etwa 3500 UpM, sind beide Kurvenäste E, T gleich, danach liegt die Kurve E oberhalb der Kurve T nach dem Stand der Technik. Der erfindungsgemäße Lüfterantrieb lässt also einerseits größere Antriebsdrehzahlen n_{A} und andererseits größere Schlupfleistungen zu, ohne dass die Lüfterdrehzahl n_{L} abfällt. Damit kann die Kupplung insbesondere bei hohen Motordrehzahlen, wie sie in bestimmten Betriebszuständen des Fahrzeuges, z. B. steile Bergfahrten, auftreten, noch betrieben werden und die erforderliche Kühlleistung (Lüfterleistung) erbringen.

Im Hinblick auf das in Figur 1 dargestellte Ausführungsbeispiel einer Flüssigkeitsreibungskupplung ist zu ergänzen, dass die Erfindung sich ebenso auf andere Bauarten von Flüssigkeitsreibungskupplungen, z. B. mit einer planförmigen Antriebsscheibe und Axialspalten oder eine topfförmige Antriebsscheibe mit Radialspalten oder weitere abgewandelte Ausführungsformen von Arbeitsräumen oder Arbeitsspalten, bezieht.

## Patentansprüche

1. Lüfterantrieb (1), insbesondere für ein Kraftfahrzeug, umfassend eine Antriebswelle (6), eine Flüssigkeitsreibungskupplung (2) sowie einen Lüfter (3), wobei die Flüssigkeitsreibungskupplung (2) eine Antriebsscheibe (5) sowie ein ein frontseitiges Gehäuseteil (4a) und ein rückseitiges Gehäuseteil (4b) aufweisendes Gehäuse (4) umfasst, welches über mindestens ein Lager (7) auf der Antriebswelle (6) gelagert ist und wobei die Flüssigkeitsreibungskupplung (2) und der Lüfter (3) in Strömungsrichtung (L) von Luft angeströmt werden, **dadurch gekennzeichnet, dass** in Strömungsrichtung (L) hinter der Flüssigkeitsreibungskupplung (2) eine Luftfördereinrichtung (13) angeordnet ist, wobei die Strömungsrichtung (L) eine Strömungsrichtung einer auf das frontseitige Gehäuseteil der Kupplung treffende Luftströmung ist, wobei die Luftfördereinrichtung mit der Antriebswelle drehfest verbunden ist.

2. Lüfterantrieb nach Anspruch 1, **dadurch gekennzeichnet, dass** die Luftfördereinrichtung als Gebläse (13) ausgebildet ist.

3. Lüfterantrieb nach Anspruch 2, **dadurch gekennzeichnet, dass** das Gebläse (13) Luft entgegen der Strömungsrichtung (L) ansaugt und in Richtung auf das rückseitige Gehäuseteil (4b) fördert.

4. Lüfterantrieb nach einem der vorhergehenden Ansprüche, **dadurch gekennzeichnet, dass** das Gebläse (13) respektive die Luftfördereinrichtung Luft aus dem Druckbereich des Lüfters (3) ansaugt.

5. Lüfterantrieb nach einem der Ansprüche 1 bis 4, **dadurch gekennzeichnet, dass** auf der Rückseite der Flüssigkeitsreibungskupplung (2) und im Luftabströmbereich des Gebläses (13) eine haubenförmige Luftleiteinrichtung (15) angeordnet ist.

6. Lüfterantrieb nach Anspruch 5, **dadurch gekennzeichnet, dass** die Luftleiteinrichtung am Gehäuse (4), insbesondere dem rückseitigen Gehäuseteil (4b) befestigt ist.

7. Lüfterantrieb nach Anspruch 5 oder 6, **dadurch gekennzeichnet, dass** die Luftleiteinrichtung (15) einen Zargenring (15a) aufweist, welcher das Gebläse (13) mantelartig umgibt.

8. Lüfterantrieb nach einem der Ansprüche 2 bis 7, **dadurch gekennzeichnet, dass** das Gebläse (13) benachbart zu dem mindestens einem Lager (7) angeordnet ist.

9. Lüfterantrieb nach einem der vorhergehenden Ansprüche, **dadurch gekennzeichnet, dass** zwischen der Vorderseite und der Rückseite der Flüssigkeitsreibungskupplung (2) eine Luftströmungsverbindung (16) angeordnet ist.

10. Lüfterantrieb nach Anspruch 9, **dadurch gekennzeichnet, dass** die Luftströmungsverbindung als Umlenkkanal (16) zwischen der Luftleiteinrichtung (15) und dem Gehäuse (4), insbesondere dem vorderen Gehäuseteil (4a), ausgebildet ist.

11. Lüfterantrieb nach einem der vorhergehenden Ansprüche, **dadurch gekennzeichnet, dass** auf dem rückseitigen Gehäuseteil (4b) vorzugsweise radial verlaufende Kühlrippen (14) angeordnet sind.

12. Lüfterantrieb nach einem der vorhergehenden Ansprüche, **dadurch gekennzeichnet, dass** an dem vorderen Gehäuseteil (4a) vorzugsweise radial verlaufende Kühlrippen (17) angeordnet sind.

13. Lüfterantrieb nach einem der Ansprüche 6 bis 12, **dadurch gekennzeichnet, dass** die Luftleiteinrichtung als Lüfternabe (15) ausgebildet ist, welche am Gehäuse (4) befestigt ist.

14. Lüfterantrieb nach einem der Ansprüche 2 bis 13, **dadurch gekennzeichnet, dass** das Gebläse (13) als Axial-, Radial- oder Halbaxialgebläse ausgebildet ist.

## Claims

1. A fan drive (1), in particular for a motor vehicle, comprising a drive shaft (6), a fluid friction clutch (2) and a fan (3), wherein the fluid friction clutch (2) comprises a drive pulley (5) and a housing (4) having a front housing part (4a) and a rear housing part (4b), the housing being mounted on the drive shaft (6) via at least one bearing (7) and wherein air flows to the fluid friction clutch (2) and the fan (3) in the flow direction (L), **characterised in that** an air conveyance arrangement (13) is arranged in the flow direction (L) behind the fluid friction clutch (2), wherein the flow direction (L) is a flow direction of an air flow impacting the front housing part of the clutch, wherein the air conveyance arrangement is connected to the drive shaft in a torque-proof manner.

2. The fan drive according to claim 1, **characterised in that** the air conveyance arrangement is formed as a blower (13).

3. The fan drive according to claim 2, **characterised in that** the blower (13) aspirates air against the flow direction (L) and conveys it in the direction to the rear housing part (4b).

4. The fan drive according to one of the preceding claims, **characterised in that** the blower (13) or the air conveyance arrangement aspirates air from the pressure region of the fan (3).

5. The fan drive according to one of claims 1 to 4, **characterised in that** a hood-shaped air guidance arrangement (15) is arranged on the back of the fluid friction clutch (2) and in the air outflow region of the blower (13).

6. The fan drive according to claim 5, **characterised in that** the air guidance arrangement is fixed to the housing (4), in particular to the rear housing part (4b) .

7. The fan drive according to claim 5 or 6, **characterised in that** the air guidance arrangement (15) has a frame ring (15a) which surrounds the blower (13) like a coat.

8. The fan drive according to one of claims 2 to 7, **characterised in that** the blower (13) is arranged adjacent to the at least one bearing (7).

9. The fan drive according to one of the preceding claims, **characterised in that** an air flow connection (16) is arranged between the front and the back of the fluid friction clutch (2).

10. The fan drive according to claim 9, **characterised in that** the air flow connection is formed as a deflection channel (16) between the air guidance arrangement (15) and the housing (4), in particular the front housing part (4a).

11. The fan drive according to one of the preceding claims, **characterised in that** cooling fins (14), preferably running in a radial manner, are arranged on the rear housing part (4b).

12. The fan drive according to one of the preceding claims, **characterised in that** cooling fins (17), preferably running in a radial manner, are arranged on the front housing part (4a).

13. The fan drive according to one of claims 6 to 12, **characterised in that** the air guidance arrangement is formed as a fan hub (15) which is fixed to the housing (4).

14. The fan drive according to one of claims 2 to 13, **characterised in that** the blower (13) is formed as an axial, radial or semi-axial blower.

## Revendications

1. Entraînement de ventilateur (1), en particulier pour un véhicule automobile, comprenant un arbre d'entraînement (6), un embrayage à friction de liquide (2) ainsi qu'un ventilateur (3), où l'embrayage à friction de liquide (2) comprend un disque d'entraînement (5) ainsi qu'un carter (4) présentant une partie de carter (4a) située sur la face avant et une partie de carter (4b) située sur la face arrière, carter qui est monté sur l'arbre d'entraînement (6) par au moins un palier (7) et où l'embrayage à friction de liquide (2) et le ventilateur (3) sont traversés par un afflux d'air suivant la direction d'écoulement (L), **caractérisé en ce qu'**un dispositif de transport d'air (13) est disposé en aval de l'embrayage à friction de liquide (2) suivant la direction d'écoulement (L), où la direction d'écoulement (L) est une direction d'écoulement d'un flux d'air atteignant la partie de carter - située sur la face avant - de l'embrayage, où le dispositif de transport d'air est relié à l'arbre d'entraînement en étant solidaire en rotation.

2. Entraînement de ventilateur selon la revendication 1, **caractérisé en ce que** le dispositif de transport d'air est conçu comme un pulseur (13).

3. Entraînement de ventilateur selon la revendication 2, **caractérisé en ce que** le pulseur (13) aspire de l'air dans le sens opposé à celui de la direction d'écoulement (L) et transporte de l'air en direction de la partie de carter (4b) située sur la face arrière.

4. Entraînement de ventilateur selon l'une quelconque des revendications précédentes, **caractérisé en ce que** le pulseur (13), ou le dispositif de transport d'air, aspire de l'air provenant de la zone de pression du ventilateur (3).

5. Entraînement de ventilateur selon l'une quelconque des revendications 1 à 4, **caractérisé en ce qu'**un dispositif déflecteur d'air (15) en forme de capot est disposé sur la face arrière de l'embrayage à friction de liquide (2) et dans la zone de sortie d'air du pulseur (13).

6. Entraînement de ventilateur selon la revendication 5, **caractérisé en ce que** le dispositif déflecteur d'air est fixé sur le carter (4), en particulier sur la partie de carter (4b) située sur la face arrière.

7. Entraînement de ventilateur selon la revendication 5 ou 6, **caractérisé en ce que** le dispositif déflecteur d'air (15) présente une virole de châssis (15a) qui, à la façon d'une enveloppe, entoure le pulseur (13).

8. Entraînement de ventilateur selon l'une quelconque des revendications 2 à 7, **caractérisé en ce que** le pulseur (13) est disposé de façon adjacente au palier (7) au moins au nombre de un.

9. Entraînement de ventilateur selon l'une quelconque des revendications précédentes, **caractérisé en ce qu'**une communication d'écoulement d'air (16) est disposée entre la face avant et la face arrière de l'embrayage à friction de liquide (2).

10. Entraînement de ventilateur selon la revendication 9, **caractérisé en ce que** la communication d'écoulement d'air est conçue comme un conduit de retour de flux (16) placé entre le dispositif déflecteur d'air (15) et le carter (4), en particulier entre ledit dispositif déflecteur d'air et la partie de carter (4a) située à l'avant.

11. Entraînement de ventilateur selon l'une quelconque des revendications précédentes, **caractérisé en ce que** des ailettes de refroidissement (14) s'étendant de préférence dans le sens radial sont disposées sur la partie de carter (4b) située sur la face arrière.

12. Entraînement de ventilateur selon l'une quelconque des revendications précédentes, **caractérisé en ce que** des ailettes de refroidissement (17) s'étendant de préférence dans le sens radial sont disposées sur la partie de carter (4a) située à l'avant.

13. Entraînement de ventilateur selon l'une quelconque des revendications 6 à 12, **caractérisé en ce que** le dispositif déflecteur d'air est conçu comme un moyeu de ventilateur (15), moyeu qui est fixé sur le carter (4).

14. Entraînement de ventilateur selon l'une quelconque des revendications 2 à 13, **caractérisé en ce que** le pulseur (13) est conçu comme un pulseur axial, radial ou semi-axial.
